# EUROPEAN PATENT APPLICATION

(11) **EP 2 474 821 A1**
(43) Date of publication of application: **11.07.2012**
(21) Application number: 12150457.5
(22) Date of filing: 09.01.2012
(51) Int. Cl.: G01M 3/00, F16L 55/26

(54) **Apparatus For Pipeline Inspection**

(30) Priority: 10.01.2011 GB 201100306
(71) Applicant: PII Limited, Northumberland NE23 1WW (GB)
(72) Inventor: Harvey, Raymond, Cramlington, Northumberland NE23 1WW (GB); Fussell, Leon, Cramlington, Northumberland NE23 1WW (GB)
(74) Representative: McWilliams, David John

(57) **Abstract**

A sensor assembly is mounted on a pipeline inspection tool. The assembly includes a sensor arm having a sensor carrier mounted at one end. The sensor arm consists of two elongate injection moulded components which cooperate to capture a pivot pin on the carrier. The pivot pin extends in a first direction and the elongate body is split along an axis which extends in a perpendicular direction. An injection moulded pivot block is mounted at the other end of the sensor arm. The elongate sections of the sensor arm cooperate to capture a further pivot pin for the pivot block. The sensor arm, carrier and pivot block are made from plastics material, e.g. nylon 12. The pivot pins are over-moulded. A magnetic flux leakage sensor is mounted in a compartment in the carrier. A resilient clip extends through a window in the compartment and an aperture in the sensor, to bias the sensor against movement within the compartment.

## Description

The disclosure relates to apparatus for pipeline inspection, more particularly, to apparatus for in-line inspection of a fluid pipeline, e.g. an oil or gas pipeline.

It is known to inspect the inside of a pipeline using an inspection apparatus commonly referred to as a pipeline "pig". A known pig includes a magnetic arrangement configured to generate a magnetic field adjacent the inner wall of the pipe as the pig is driven along the pipe. The known pig further includes magnetic flux leakage (MFL) sensors, which are configured to detect changes in magnetic flux density of the magnetic field as the sensors travel along the pipe. This makes it possible to detect and analyse defects in the pipeline, such as corrosion, cracks or laminations in the pipe wall.

Typically, the MFL sensors are deployed on sensor arms which project in a radial array from the tool and are spring biased to urge the sensors into contact with an internal surface of a pipeline.

Conventional pipelines are constructed from individual sections of pipe, which are interconnected to define a string of pipe sections. Typically, the joint between adjacent pipe sections defines an internal projection in the pipeline, such as a bead formed by welding the two pipe sections together. However, weld beads and other internal projections present an inspection problem, since the sensor arm will often lose contact with the pipe wall when it strikes the projection. Moreover, the sensor arm may reverberate for a period of time after the strike. Hence, inspection data may be lost until such time as the sensor arm regains more permanent travel along the pipe wall.

Moreover, the impact of weld bead strikes can lead to wear or other damage to the sensors and sensor arms, which can inhibit the ability of the apparatus to record accurate data. Repair and maintenance of the apparatus can be costly, e.g. in terms of production costs and the period of time in which the tool is out of use.

The disclosure overcomes or mitigates the above-discussed problems, or other disadvantages or problems, associated with known inspection apparatus.

One aspect of the disclosure provides apparatus for a pipeline inspection tool, in the form of a sensor assembly for mounting on a pipeline inspection tool, the sensor assembly comprising a sensor arm for mounting on a pipeline inspection tool and a sensor carrier for supporting a magnetic flux leakage sensor, wherein the sensor arm has a first end for connection to an inspection tool and a second end adjacent which the sensor carrier is secured, wherein the sensor carrier is pivotably coupled to the sensor arm by a pivot pin, and the sensor arm consists of multiple elongate sections which cooperate to capture the pivot pin and thereby secure the sensor carrier for movement with the sensor arm.

In exemplary embodiments, the sensor carrier is of injection moulded construction and the pivot pin is an over-moulded component of the sensor carrier. The pivot pin may be of metal construction, e.g. stainless steel.

In exemplary embodiments, a pivot block is mounted at the first end of the sensor arm, for attaching the assembly to an inspection tool. In exemplary embodiments, the pivot block is coupled to the sensor arm by a further pivot pin, and the elongate sections of the sensor arm cooperate to capture said pivot pin at said second end of the sensor arm, and thereby secure the sensor arm for movement relative to the pivot block.

In exemplary embodiments, the pivot block is of injection moulded construction and said further pivot pin is an over-moulded component of the pivot block. The pivot pin may be of metal construction, e.g. stainless steel.

Another aspect of the disclosure provides apparatus for a pipeline inspection tool, in the form of a sensor assembly for mounting on a pipeline inspection tool, the sensor assembly comprising a sensor arm for mounting on a pipeline inspection tool and a sensor carrier for supporting a magnetic flux leakage sensor, wherein the sensor arm has a first end for connection to an inspection tool and a second end adjacent which the sensor carrier is secured, wherein the sensor carrier is pivotably coupled to the sensor arm by a pivot pin, and the sensor arm consists of injection moulded or other plastics material sections which cooperate to capture the pivot pin and thereby secure the sensor carrier for movement with the sensor arm.

However, other production techniques may be used in alternative embodiments, e.g. die casting, rotational moulding or shell moulding.

In exemplary embodiments, the sensor arm comprises multiple sections of plastics material, e.g. nylon 12 material.

In exemplary embodiments, the injection moulded or other plastics material sections of the sensor arm each consist of an elongate section, and wherein the elongate sections cooperate with one another to capture the pivot pin at the distal end of the sensor arm and thereby secure the sensor carrier for movement with the sensor arm.

In exemplary embodiments, the sensor arm comprises a two-part body consisting of two of said elongate sections cooperating with one another to capture the pivot pin at the distal end of the sensor arm.

In exemplary embodiments, the sensor arm defines an elongate body, and wherein the elongate body is split into two halves along its length, e.g. wherein said two halves of the body each define a recess at one end for capture of the pivot pin. In exemplary embodiments, the pivot pin extends in a first direction and the elongate body is split along an axis which extends in a direction perpendicular to said first direction.

In exemplary embodiments, a pivot block is mounted at the first end of the sensor arm, for attaching the assembly to an inspection tool. In exemplary embodiments, the pivot block is coupled to the sensor arm by a further pivot pin, and the injection moulded or other plastics material sections of the sensor arm cooperate to capture said pivot pin at said second end of the sensor arm, and thereby secure the sensor arm for movement relative to the pivot block. In exemplary embodiments, said further pivot pin extends in a first direction and the sensor arm is split along an axis which extends in a direction perpendicular to said first direction.

In exemplary embodiments, the sensor carrier defines a compartment having an open end through which a magnetic flux leakage sensor may be inserted into the sensor carrier.

In exemplary embodiments, the sensor carrier defines a compartment having an open end, and a magnetic flux leakage sensor is mounted in said compartment, wherein the sensor has a sensor face which faces outwardly through the open end of the compartment.

In exemplary embodiments, the sensor is secured in place in the compartment by a resilient clip. In exemplary embodiments, said compartment includes a window and said sensor includes an aperture which is accessible through said window, wherein the clip extends through said window and said aperture, to bias the sensor against movement within the compartment.

A further aspect of the disclosure provides a sensor carrier for a sensor assembly on a pipeline inspection apparatus, wherein the sensor carrier defines a compartment having an open end through which a sensor may be inserted into the sensor carrier, and wherein the sensor is secured in place in the compartment by a resilient clip.

In exemplary embodiments, a magnetic flux leakage sensor is mounted in said compartment, and the sensor has a sensor face which faces outwardly through the open end of the compartment.

In exemplary embodiments, said compartment includes a window and said sensor includes an aperture which is accessible through said window, wherein the clip extends through said window and said aperture, to bias the sensor against movement within the compartment.

In exemplary embodiments, the sensor carrier is of injection moulded construction and includes a pivot pin as an over-moulded component of the sensor carrier, for use in pivotably connecting the sensor carrier to a sensor arm on a pipeline inspection apparatus. The pivot pin may be of metal construction, e.g. stainless steel.

The accompanying drawings, which are incorporated in and constitute a part of the specification, illustrate one or more embodiments and, together with the description, explain these embodiments. In the drawings:
Figure 1 is a schematic side view of part of a pipeline inspection apparatus;
Figure 2 is an exploded perspective view of a sensor arm, sensor carrier and sensor for use in the apparatus of Figure 1;
Figure 3 is an exploded perspective view of a sensor carrier and sensor for use in the apparatus of Figure 1;
Figure 4 is a schematic cross-sectional view through a sensor for use in the apparatus of Figure 1;
Figure 5 is a schematic perspective view of a sensor carrier for use in the apparatus of Figure 1 in a first position; and
Figure 6 is a schematic perspective view of a sensor carrier for use in the apparatus of Figure 1 in a second position.

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the disclosure to "an exemplary embodiment," "an embodiment," or variations thereof means that a particular feature, structure, or characteristic described in connection with an embodiment is included in at least one embodiment of the subject matter disclosed. Thus, the appearance of the phrases "in an exemplary embodiment," "in an embodiment," or variations thereof in various places throughout the disclosure is not necessarily referring to the same embodiment. Further, the particular features, structures or characteristics may be combined in any suitable manner in one or more embodiments.

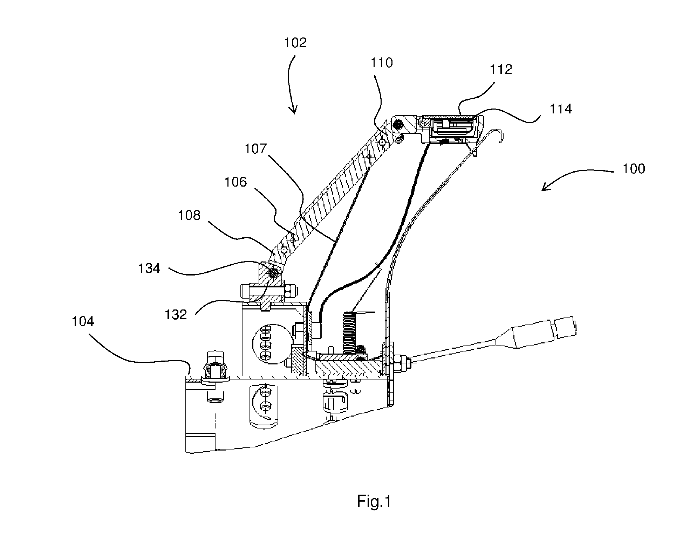

Referring firstly to Figure 1, an apparatus for pipeline inspection is indicated generally at 100. The apparatus 100 includes a sensor assembly 102 mounted on an inspection tool or "pig" (only part of which is indicated at 104) configured for in-line inspection of pipelines. In general terms, the sensor assembly 102 is used to detect corrosion and other defects in the material of the pipeline along which the tool 104 is travelling.

The sensor assembly 102 consists of a plurality of sensor arms 106 (only one of which is shown in Figure 1, for ease of illustration) which project in a radial array from the tool 104. Each sensor arm 106 has a first end 108 for connection to the tool 104 and a second end 110 remote from the tool 104. As such, the first end 108 may be referred to as the 'fixed' end, and the second end 110 may be referred to as the 'distal' end. A sensor carrier 112 is connected to the second end 110 of each arm 106 and a magnetic flux leakage (MFL) sensor 114 is supported in each sensor carrier 112.

The tool 104 includes a magnetic arrangement (not shown) for generating a magnetic field adjacent the inner wall of the pipe along which the tool 104 is travelling. The sensor arms 106 are spring biased (e.g. by spring 107), for urging the sensors 114 into contact with the inner wall.

The sensors 114 detect changes in the magnetic flux density, as the tool travels along the pipe. Data from the sensors 114 is recorded and analysed to detect defects in the pipeline, such as corrosion, cracks or laminations in the pipe wall.

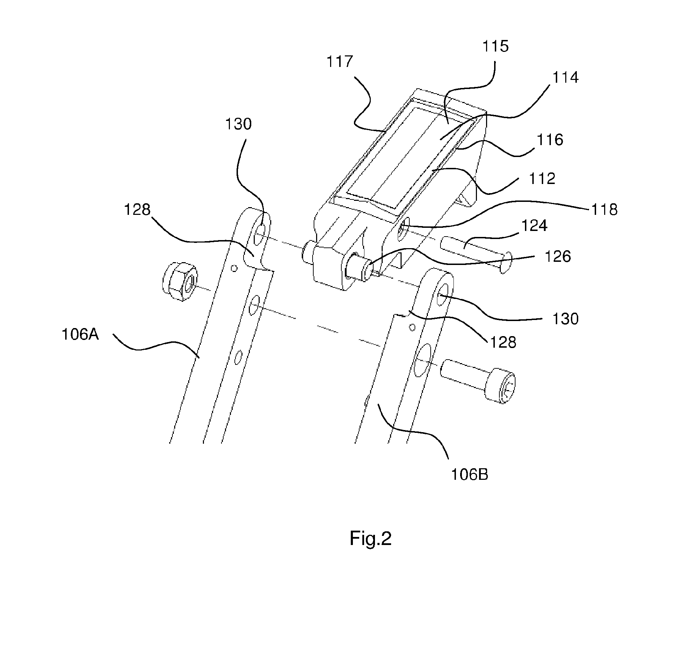

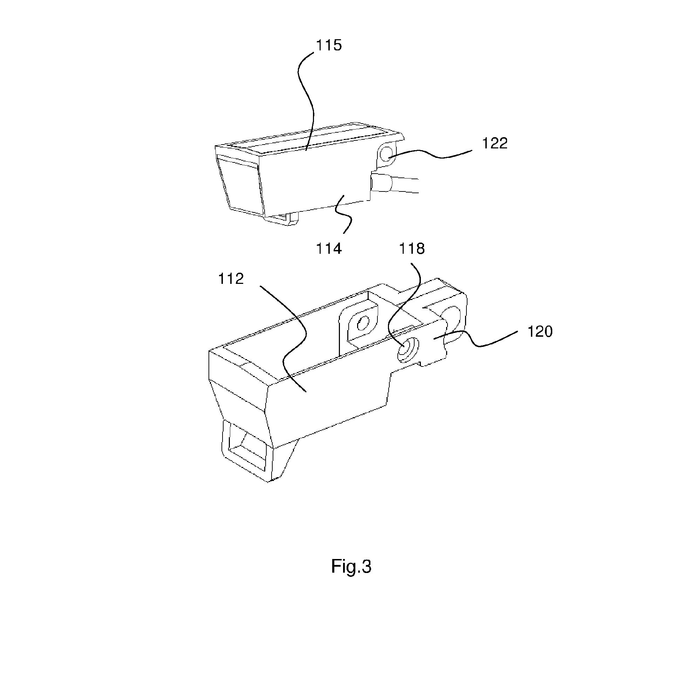

Figures 2 and 3 show an exemplary embodiment of a sensor arm 106, sensor carrier 112 and sensor 114 for use in the apparatus 100 of Figure 1.

In this embodiment, the sensor carrier 112 defines a compartment 116 into which the sensor 114 is fitted. The sensor 114 has a sensor face 115 which is directed outwardly from an open end 117 of the compartment 116.

An aperture 118 is formed in a side 120 of the compartment 116. A correspondingly located aperture 122 is formed in the sensor 114. A locating pin 124 is used to extend through the aperture 118 in the compartment 116 and into the aperture 122 in the sensor 114, for securing the sensor 114 for travel with the sensor carrier 112.

The sensor carrier 112 includes a pivot pin 126, by means of which the carrier 112 can be pivotably connected to the sensor arm 106. In exemplary embodiments, the sensor carrier 112 is an injection moulded component (e.g. made from plastics material) and the pivot pin 126 may be over-moulded during the injection moulding process, so as to be integral with the sensor carrier 112 prior to connection to the sensor arm 106. This reduces the number of steps required to assemble the apparatus 100.

In this embodiment, the sensor arm 106 consists of multiple elongate sections 106A, 106B which cooperate with one another to capture the pivot pin 126, and thereby secure the sensor carrier 112 for movement with the sensor arm 106. The sensor arm 106 is split along its length between the first and second ends 108, 110 to define said elongate sections 106A, 106B. As can be seen, the pivot pin 126 extends in a first direction and the arm 106 is split along an axis which extends in a direction perpendicular to said first direction. In this embodiment, the sensor arm 106 is split into two halves (defined by the elongate sections 106A, 106B) along its length.

The elongate sections 106A, 106B each define a recess 128 at the second end 110 for capture of the pivot pin 126. The elongate sections 106A, 106B are secured together at the second end 110 using a nut and bolt arrangement, e.g. of stainless steel construction, passing through respective apertures 130 in the elongate sections 106A, 106B. A similar arrangement (not shown) is used to secure the elongate sections 106A, 106B together at the first end 108.

Referring back to Figure 1, the first end 108 of the sensor arm 106 is pivotably coupled to a pivot block 132, by means of which the sensor arm is mounted on the tool 104. The sensor arm 106 is coupled to the pivot block 132 by a further pivot pin 134, in order to be pivotable relative to the tool 104 and to secure the sensor arm 106 for movement with the pivot block 132. The further pivot pin 134 extends in a first direction which is perpendicular to the axis along which the sensor arm is split into the elongate sections 106A, 106B.

Although not shown, it will be understood that the two elongate sections 106A, 106B of the sensor arm 106 cooperate to capture said further pivot pin 134. More particularly, the two elongate sections 106A, 106B each defines a recess for capture of said further pivot pin 134, e.g. in the same manner as described above (in relation to the pivot pin 126).

In exemplary embodiments, the pivot block 132 is an injection moulded component (e.g. made from plastics material) and the pivot pin 134 may be over-moulded during the injection moulding process, so as to be integral with the pivot block 132 prior to connection of the sensor arm 106. This reduces the number of steps required to assemble the apparatus 100.

In exemplary embodiments, the sensor arm is made from a lightweight material such as Nylon. Nylon 12 has been found to provide particular benefits, in terms of weight reduction and suitability for use in the harsh operating conditions of in-line inspection.

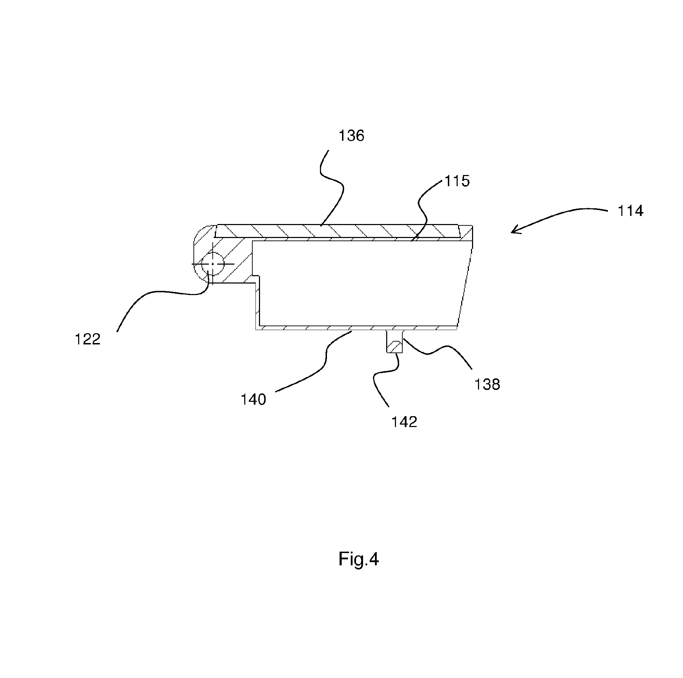

A known MFL sensor 114 is shown in Figure 4. The sensor 114 has a sensor face 115 which is directed outwardly from an open end of the carrier 112 (e.g. as shown at 117 in Figure 2), in use. The sensor face 115 is covered by a wear strip 136. The sensor 114 also includes an aperture 122 for receiving a locating pin, e.g. as described with respect to Figure 2. The sensor 114 further includes a projection 138 on its underside 140 which defines an aperture 142 for receiving a securing device (as will be described below).

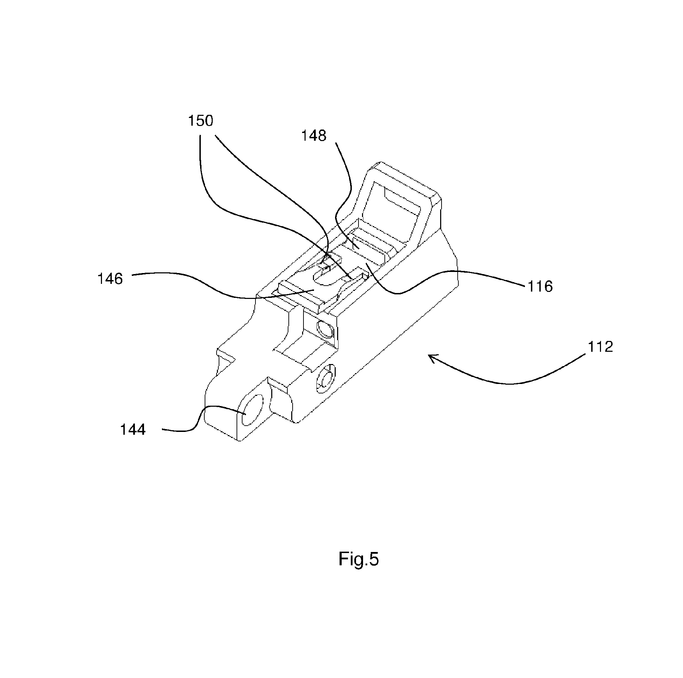

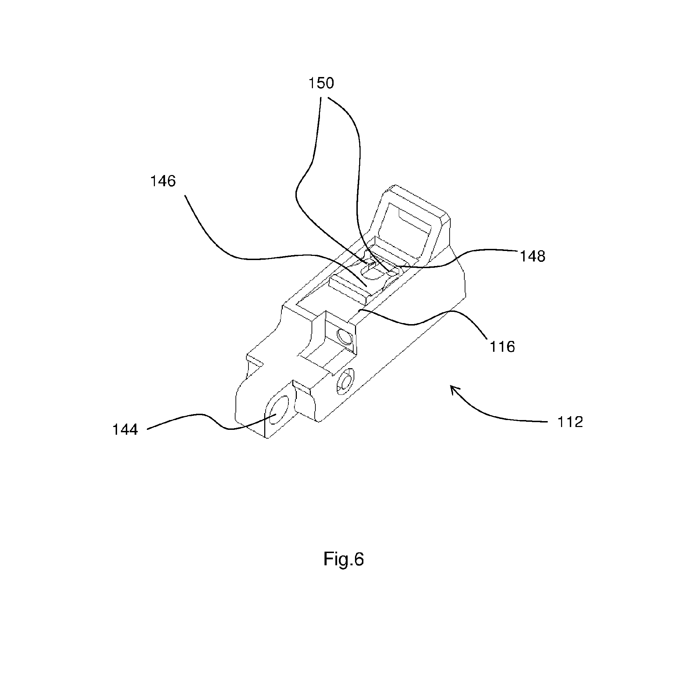

Figures 5 and 6 show an exemplary embodiment of a sensor carrier 112 configured for use with sensors 114 of the kind shown in Figure 4. As described above, the sensor carrier 112 defines a compartment 116 into which the sensor 114 is fitted. The sensor 114 has a sensor face 115 which is directed outwardly from an open end 117 of the compartment 116. An aperture 118 is formed in a side 120 of the compartment 116 for receiving a locating pin, e.g. as described with respect to Figure 2. The sensor carrier 112 defines an aperture 144 for a pivot pin 126, by means of which the carrier 112 can be pivotably connected to a sensor arm 106. The carrier 112 may be an injection moulded component and the pivot pin 126 may be over-moulded during the injection moulding process.

In this embodiment, the sensor 114 is secured in place in the compartment 116 by a resilient clip 146. The compartment 116 includes a window 148 which is positioned so that the aperture 142 on the sensor 114 is accessible through said window 148. As can be seen from Figures 5 and 6, the clip 146 can be inserted into the carrier 112 so as to extend through said window 148 and said aperture 142. The clip 146 includes two resilient arms 150, which adopt a snap-fitting engagement with the inside of the compartment 116 once inserted in the manner shown in Figure 6, to bias the sensor 114 against movement within the compartment 116. The clip 146 can be easily connected and removed, yet is robust enough to survive the pipeline environment. It allows the MFL sensor 114 to be removed and re-used.

Tests indicate that the apparatus will exhibit improved dynamic performance and resistance to pipeline operating environments. The apparatus further provides reduced manufacturing costs and lead time, as well as ease of assembly and maintenance (e.g. when replacing damaged/worn components). The exemplary sensor carrier allows MFL sensors to be fitted and replaced with ease. Using an injection-moulding process reduces manufacturing costs and lead-time compared to conventional machined components. Nylon 12 offers great resistance to pipeline operating environments. Being lightweight it also reduces sag in support assemblies on the inspection tool, e.g. a conventional floating ring arrangement.

However, other production techniques and/or plastics materials may be used in alternative embodiments, e.g. die casting, rotational moulding or shell moulding.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended and are understood to be within the scope of the claims.

## Claims

1. Apparatus for pipeline inspection, in the form of a sensor assembly for mounting on a pipeline inspection tool, the sensor assembly comprising a sensor arm for mounting on a pipeline inspection tool and a sensor carrier for supporting a magnetic flux leakage sensor, wherein the sensor arm has a first end for connection to an inspection tool and a distal end adjacent which the sensor carrier is secured, wherein the sensor carrier is pivotably coupled to the sensor arm by a pivot pin, and the sensor arm consists of multiple elongate sections which cooperate with one another to capture the pivot pin at the distal end of the sensor arm and thereby secure the sensor carrier for movement with the sensor arm.

2. Apparatus according to claim 1 wherein the sensor arm comprises a two-part body consisting of two elongate sections which cooperate with one another to capture the pivot pin at the distal end of the sensor arm.

3. Apparatus according to claim 1 wherein the sensor arm defines an elongate body, and wherein the elongate body is split into two halves along its length, e.g. wherein said two halves of the body each define a recess at one end for capture of the pivot pin.

4. Apparatus according to claim 3 wherein the pivot pin extends in a first direction and the elongate body is split along an axis which extends in a direction perpendicular to said first direction.

5. Apparatus according to claim 1 wherein a pivot block is mounted at the first end of the sensor arm, for attaching the assembly to an inspection tool.

6. Apparatus according to claim 5 wherein the pivot block is coupled to the sensor arm by a further pivot pin, and the elongate sections of the sensor arm cooperate to capture said pivot pin at said second end of the sensor arm, and thereby secure the sensor arm for movement relative to the pivot block, e.g. wherein the sensor arm is split into two halves along its length, each half defining a recess for capture of said further pivot pin.

7. Apparatus according to claim 6 wherein said further pivot pin extends in a first direction and the sensor arm is split along an axis which extends in a direction perpendicular to said first direction.

8. Apparatus according to claim 1 wherein the sensor arm is made from plastics material, e.g. nylon 12.

9. Apparatus according to claim 1 wherein the sensor carrier is of injection moulded construction and the pivot pin is an over-moulded component of the sensor carrier.

10. Apparatus according to claim 5 wherein the pivot block is of injection moulded construction and said further pivot pin is an over-moulded component of the pivot block.

11. Apparatus according to claim 1 wherein the sensor carrier defines a compartment having an open end through which a magnetic flux leakage sensor may be inserted into the sensor carrier.

12. Apparatus according to claim 1 wherein the sensor carrier defines a compartment having an open end, and a magnetic flux leakage sensor is mounted in said compartment, wherein the sensor has a sensor face which faces outwardly through the open end of the compartment.

13. Apparatus according to claim 12 wherein the sensor is secured in place in the compartment by a resilient clip.

14. Apparatus according to claim 13 wherein said compartment includes a window and said sensor includes an aperture which is accessible through said window, wherein the clip extends through said window and said aperture, to bias the sensor against movement within the compartment.

15. Apparatus for pipeline inspection, in the form of a sensor assembly for mounting on a pipeline inspection tool, the sensor assembly comprising a sensor arm for mounting on a pipeline inspection tool and a sensor carrier for supporting a magnetic flux leakage sensor, wherein the sensor arm has a first end for connection to an inspection tool and a second end adjacent which the sensor carrier is secured, wherein the sensor carrier is pivotably coupled to the sensor arm by a pivot pin, and the sensor arm consists of injection moulded or other plastics sections which cooperate with one another to capture the pivot pin and thereby secure the sensor carrier for movement with the sensor arm.

16. A sensor carrier for a sensor assembly on a pipeline inspection apparatus, wherein the sensor carrier defines a compartment having an open end through which a sensor may be inserted into the sensor carrier, and wherein the sensor is secured in place in the compartment by a resilient clip.

17. A sensor carrier according to claim 16 wherein said compartment includes a window and said sensor includes an aperture which is accessible through said window, wherein the clip extends through said window and said aperture, to bias the sensor against movement within the compartment.

18. A sensor carrier according to claim 17 wherein the sensor carrier is of moulded or cast construction and includes an integrally attached pivot pin for connection of the carrier to a sensor arm of a sensor assembly on a pipeline inspection apparatus.
